Europäisches Patentamt

(19) European Patent Office

Office européen des brevets

(11) Veröffentlichungsnummer: **0 252 280**
**B1**

(12) **EUROPÄISCHE PATENTSCHRIFT**

(45) Veröffentlichungstag der Patentschrift:
**10.10.90**

(51) Int. Cl.⁵: **F16G 15/06**

(21) Anmeldenummer: **87107923.2**

(22) Anmeldetag: **02.06.87**

(54) **Kettenanschlusselement für den Untertagebetrieb.**

(30) Priorität: **10.07.86 DE 3623148**

(43) Veröffentlichungstag der Anmeldung:
**13.01.88 Patentblatt 88/2**

(45) Bekanntmachung des Hinweises auf die Patenterteilung:
**10.10.90 Patentblatt 90/41**

(84) Benannte Vertragsstaaten:
**BE DE ES FR GB GR IT LU NL**

(56) Entgegenhaltungen:
**DE-A- 3 043 429**
**DE-U- 8 517 070**
**FR-A- 976 239**
**FR-A- 2 529 632**
**US-A- 4 337 614**

(73) Patentinhaber: **Müller & Borggräfe GmbH, Hagener Strasse 20, D-5820 Gevelsberg(DE)**
Patentinhaber: **August Friedberg Schrauben- und Nietenfabrik GmbH, Belforter Strasse 63, D-4650 Gelsenkirchen-Rotthausen(DE)**

(72) Erfinder: **Goerke, Wolfgang, Köhlerwaldstrasse 41, D-5802 Wetter/Ruhr 2(DE)**
Erfinder: **Gropp, Ottokar, Eckenerstrasse 2, D-5802 Wetter/Ruhr 2(DE)**
Erfinder: **Salewski, Rudolf, Amselstrasse 9a, D-4352 Herten(DE)**
Erfinder: **Borke, Albert, Marschallstrasse 24, Gelsenkirchen(DE)**

(74) Vertreter: **Herrmann-Trentepohl, Werner, Dipl.-Ing. et al, Schaeferstrasse 18, D-4690 Herne 1(DE)**

## Beschreibung

Die Erfindung betrifft ein Kettenanschlußelement, insbesondere einen Kettenschäkel für Aufhängungen des Untertagebetriebes gemäß dem Oberbegriff des Patentanspruches 1.

Das Kettenanschlußelement gemäß der Erfindung dient entweder zur Verbindung der Last mit einem oder mehreren Kettensträngen, welche die von der Last ausgehenden Kräfte auf den Streckenausbau übertragen und damit letztlich in das Gebirge ableiten. In diesem Fall wird der Bolzen durch ein Kettenglied geführt, während das Element an die Last, z.B. über eine an dieser fest angebrachte Öse angeschlossen wird. Handelt es sich um ein Kettenschäkel, dann liegt die Schäkelrundung in der Öse, während die Schäkelschenkel von der Last abstehen. Oder das Kettenanschlußelement sitzt an einer Tragklaue, welche die Verbindung zum Streckenausbau herstellt. Auch in diesem Fall dient der Bolzen zum Anschluß an das Kettenglied. Insbesondere der erstgenannte Fall ist der häufigere bei der Aufhängung von Lasten, von denen außer statischen Kräften dynamische Belastungen ausgehen. Das gilt vor allem für die Aufhängung von Fahrschienen, welche das Gleis von Hängebahnsystemen bilden. Vor allem Einschienenhängebahnen, welche im Steinkohlenbergbau den Transport von Material und Personen übernehmen, werden auf diese Weise eingebaut.

Das erfindungsgemäße Kettenanschlußelement verwendet die drehfeste Lagerung des Kettenbolzens aus verschiedenen Gründen. Besteht nämlich das Sicherungselement aus einer Mutter, welche auf einen Gewindeschaft des dem Kopfende gegenüberliegenden Bolzenendes aufgeschraubt wird, so ist für die Montage meistens ein Schraubenschlüssel erforderlich, um die Mutter auf das Gewinde zu drehen. Die drehfeste Lagerung liegt im Bolzen gegen Mitdrehen fest und bietet derart eine bedeutende Montageerleichterung unter den vor allem durch Dunkelheit und Verschmutzung bzw. Verkrustungen an Stahlteilen gekennzeichneten ungünstigen Verhältnissen, welche die Einbaubedingungen im Untertagebetrieb bestimmen. Das Sicherungselement hat die Aufgabe, den Bolzen in der Bolzenaussparung des Elementes festzuhalten.

Die Erfindung geht von einem Kettenschäkel aus, welcher genormt und daher bekannt ist (DIN 20635). Hierbei besteht der Bolzen aus dem gleichen Werkstoff wie der Kettenschäkel, für den Stahl in der Qualität St 52-3N nach DIN 17100 vorgeschrieben ist. Beim Einsatz im Bergbau werden Schäkel und Bolzen vormontiert geliefert. Es hat sich jedoch ergeben, daß das aus dem Kettenschäkel bestehende Element in zunehmendem Maße für sich beschafft und erst auf den Zechen mit den Bolzen zusammengebracht werden, die ihrerseits gesondert beschafft werden.

Werden solche Kettenanschlußelemente wie beschrieben an Einschienenhängebahnen verwendet, so tritt durch die drehfeste Lagerung des Bolzens nach relativ kurzer Zeit ein einseitiger Bolzenverschleiß durch das aufgefädelte Endglied des Kettenstranges auf. Dadurch wird der Bolzen unzuverlässig und muß ausgewechselt werden. Die sich hieraus ergebenden Wartungs- und Reparaturaufwände sind außerordentlich hoch. Außerdem können Gefahrenzustände nicht ausgeschlossen werden, die nicht hinnehmbar sind.

Tragklauen einfacher Bauart, welche in der Aufhängung den Anschluß an den Streckenausbau herstellen, verwenden manchmal nur einen Bolzen, der gleichzeitig zum Verspannen der Tragklaue mit dem Ausbauprofil und als Kettenanschlußbolzen dient. Die leistungsfähigeren Tragklauen benutzen dagegen in der Regel für beide Zwecke je einen mit einer Mutter versehenen Bolzen, der am Kettenanschlußbolzen als Sicherungselement dient. Wenn man den Bolzen drehbar, d.h. unter Weglassung einer Verdrehsicherung lagert, tritt ein einseitiger, nennenswerter Verschleiß nicht auf. Deshalb werden bei Tragklauen die Kettenanschlußbolzen drehbar gelagert. Indessen hat man sich bei den Tragklauen bereits entschlossen, zur Verbesserung der Sicherheit Sonderbauformen einzusetzen, welche hohe Zugfestigkeiten und in manchen Fällen auch besondere Gewinde zur Herabsetzung der Kerbwirkung des Muttergewindes im Bolzen nicht ausschließen.

Die unter solchen Gesichtspunkten entwickelten Sonderbauformen für Tragklauen sind bereits bekannt (DE-A 3 043 429). Sie weisen einen in der Höhe verminderten Sechskantkopf an einem Ende des Schraubenbolzens auf, der am anderen Ende mit dem Gewinde für die Mutter versehen ist. Der Sechskantkopf weist einen mit dem Bolzen eine Baueinheit bildenden Zapfen auf, der in axialer Verlängerung des Schraubenschaftes auf der dem Teller des Kopfes gegenüberliegenden Kopfseite angeordnet ist. Durch diese Formgebung soll erreicht werden, daß ohne größeren Aufwand für die Herstellung der Schraube auch bei starker Verstaubung oder Einbettung in die zur Staubbekämpfung im Steinkohlenbergbau unter Tage benutzte Paste die betreffende Sonderschraube von den Normalschrauben unterschieden werden kann, welche die erforderliche Sicherheit nicht aufweisen. Allerdings muß auch der Einbau der Sonderschraube von außen kontrollierbar sein. Dazu ist außerdem erforderlich, der Verwechslungsgefahr des Sechskantkopfes mit dem Zapfen vorzubeugen. Hieraus ergibt sich eine besondere Formgebung, welche zusätzliche Schlüsselflächen auf dem Zapfen notwendig macht. Die Herstellung eines solchen Bolzens wird dadurch erheblich erschwert und verteuert.

Abgesehen von dem weiteren Nachteil, daß diese Sonderschrauben nicht zur Vermeidung des einseitigen Kettenverschleißes geeignet sind, passen sie mit ihrem Kopf nicht in die eingangs beschriebene drehfeste Lagerung des Bolzens, wenn man sie als Kettenbolzen in derart ausgebildeten Kettenanschlußelementen verwenden will. Überdies hat sich herausgestellt, daß ihre durch die beschriebene Sonderform geschaffene Kontrollmöglichkeit nicht ausreicht. Es ist zwar möglich, solche Sonderschrauben in Gitterboxen, in denen sie normalerweise bereitgehalten werden, von Normalschrauben zuverlässig zu trennen. Unter Tage sind jedoch die Lichtverhältnisse häufig derart schlecht, daß das Erkennungsmerkmal der Sonderschraube nicht beobachtet werden kann. Da man solche Sonderschrauben mit den Tragklauen aber erst bei der Montage zusammenbringt, können Verwechslungen mit Normalschrauben nicht ausgeschlossen werden.

Der Erfindung liegt die Aufgabe zugrunde, bei einem Kettenbolzen der eingangs als bekannt vorausgesetzten Kettenanschlußelemente auf einfache Weise eine erheblich verlängerte Lebensdauer zu gewährleisten und außerdem dafür zu sorgen, daß diese auch erreicht wird.

Diese Aufgabe löst die Erfindung mit den Merkmalen des Patentanspruches 1. Zweckmäßige Ausführungsformen der Erfindung sind Gegenstand der Unteransprüche.

Es hat sich überraschend herausgestellt, daß die Härtung des Bolzens den einseitigen Verschleiß des Bolzenschaftes trotz drehfester Lagerung des Bolzens über lange Zeit ausschließt. Die dazu führende Wärmebehandlung besteht in einem Aufkohlen des Bolzenstahls bis zu einer Tiefe von ca. 0,3 mm bei einem Randkohlenstoffgehalt von ca. 0,8 bis 1 % C mit auf die Härtung folgendem Anlassen. Durch diese Wärmebehandlung unterscheidet sich auch der Bolzen von dem Normschäkel, welcher lediglich normal geglüht ist.

Die für die Verwechslungsfreiheit des neuen Bolzens mit herkömmlichen Bolzen entscheidende Erkennbarkeit ist bei dem erfindungsgemäßen Bolzen zunächst durch die beiden Zapfen gegeben, von denen stets einer erkennbar bleibt, auch wenn der andere Zapfen wegen ungünstiger Einsehbarkeit nicht ohne weiteres oder überhaupt nicht zu sehen ist. Hierbei wird durch besondere Formgebung des Zapfens an dem Bolzenkopf einerseits ein besonderer Arbeitsgang bei der Bolzenherstellung vermieden, weil der glatte Zapfen nicht umgeformt zu werden braucht. Andererseits aber wird die Funktion der drehfesten Lagerung sichergestellt, weil das Anlegen der Kreisscheibe des Kopfes an den Vorsprung der Bolzenaussparung durch den Zapfen nicht behindert wird. Auf der gegenüberliegenden Seit ermöglicht die Formgebung des Zapfens eine Wahlmöglichkeit für unterschiedliche Sicherungselemente. Bei Verwendung der bekannten Muttersicherung ermöglicht der Kegel des Zapfens eine Reduzierung des Zapfenquerschnittes und außerdem ein leichtes Auffädeln der Mutter trotz ihres Innengewindes.

Ferner ist bei dem erfindungsgemäßen Bolzen im Falle der totalen Sichtbehinderung durch die in den Zapfenstirnflächen und damit an beiden erreichbaren Bolzenenden vorgesehenen Tastkerben dafür gesorgt, daß auch unter derart ungünstigen Bedingungen jederzeit kontrolliert und erkannt werden kann, ob der richtige Bolzen vorliegt bzw. eingebaut worden ist. Diese Markierungen erleichtern auch das Auffinden des Bolzens, wenn er unter ungeeigneten, aber ähnlich aussehenden Schraubenbolzen verborgen ist.

Die Erfindung hat den Vorteil, daß sie einerseits die Lebensdauer des Bolzens auch bei erheblichen, insbesondere dynamischen und einseitig auf die glatten Mantelflächen des Schraubenschaftes wirkenden Beanspruchungen verlängert, andererseits aber auch den Einbau des Bolzens gewährleistet, weil der Bolzen einfach herzustellen, leicht herauszusuchen, einfach zu handhaben und unter allen ungünstigen Umständen ohne Schwierigkeiten daraufhin zu kontrollieren ist, ob nicht an seiner Stelle ein ungeeigneter Kettenschlußbolzen eingebaut worden ist.

Bei einsetzendem Verschleiß besteht die Möglichkeit, den Bolzen mehrfach zu nutzen. Dazu wird der erfindungsgemäße Bolzen um einen Halbkreis gedreht und erneut eingebaut. Dann ermöglicht die gegenüberliegende Abflachung der Kreisscheibe des Kopfes die Nutzung der Vorteile einer drehfesten Lagerung. Dies erleichtert unbeschadet der mehrfachen Nutzung des Bolzens auch dessen Einbau, weil das Aufsuchen des Vorsprunges, der mit der Abflachung zusammenwirkt, vereinfacht wird.

Die Ausführung des Patentanspruches 2 gestattet eine weitere Vereinfachung des neuen Bolzens, weil das Muttergewinde an dem der Kopfseite gegenüberliegenden Bolzenende entfällt. Bei dieser Ausführungsform dient die drehfeste Lagerung des Kettenbolzens dazu, den Federstecker von Beanspruchungen freizuhalten, die sich aus einer Bolzendrehung ergeben können.

Die Einzelheiten, weiteren Merkmale und andere Vorteile der Erfindung ergeben sich aus der nachfolgenden Beschreibung einer Ausführungsform anhand der Figuren in der Zeichnung; es zeigen

Fig. 1 in Ansicht und Draufsicht eine erste Ausführungsform des Bolzens für ein erfindungsgemäßes Kettenanschlußelement in Ansicht und Draufsicht, wobei das Sicherungselement strichpunktiert wiedergegeben ist und

Fig. 2 in der Fig. 1 entsprechender Darstellung eine weitere Ausführungsform der Erfindung.

In den Figuren ist das Element nicht dargestellt, mit dem der Kettenbolzen (1) zusammen verwendet wird. Es fehlt auch die Darstellung der übrigen Teile der Aufhängung, nämlich wenigstens ein Kettenstrang und eine Aufhängeklaue, die mit dem Ausbauprofil des Streckenausbaus zusammenwirkt. Diese Teile sind bekannt.

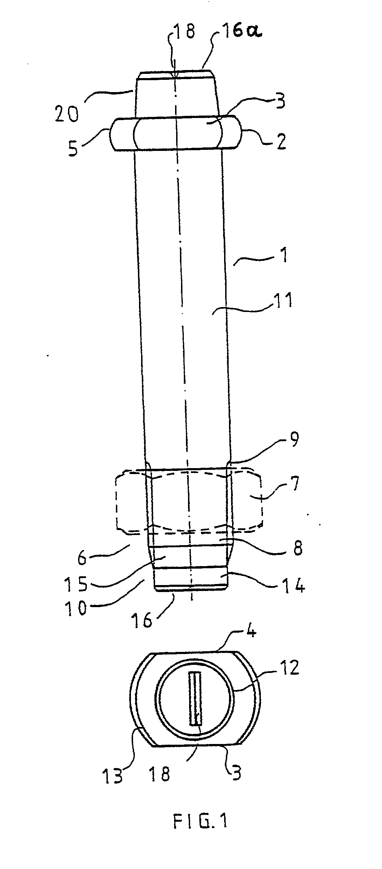

Der Bolzen (1) hat einen kreisscheibenförmigen Kopf (2) und wird durch das Zusammenwirken eines nicht dargestellten Vorsprungs an einer den Bolzen (1) aufnehmenden Bolzenaussparung des nicht wiedergegebenen Elementes mit einer ebenen Kopffläche (3 bzw. 4) drehfest gelagert. An seinem dem Kopfende (5) gegenüberliegenden Ende (6) weist der Bolzen (1) ein Sicherungselement (7) auf, das zur Verspannung des Bolzens in der Bolzenaussparung dient. Im Ausführungsbeispiel nach Fig. 1 weist zu diesem Zweck der Bolzen einen im Durchmesser verminderten Gewindezylinder (8) und ein Außengewinde (9) auf. Auf dieses Gewinde wird das als Mutter ausgeführte Sicherungselement aufgeschraubt.

Der Bolzen ist zur Verschleißminderung gehärtet, was in den Figuren nicht dargestellt, jedoch eingangs beschrieben worden ist. An den beiden Enden (5 und 6) ist er mit je einem Rundzapfen (10 bzw.

20) versehen. Beide Rundzapfen weisen einen Vollquerschnitt auf. Sie verlängern den Schaft (11) des Bolzens (1) axial.

Der am Kopfende (5) vorgesehene Zapfen winkelt seinen Querschnitt, d.h. seine Umrißlinien (12) sind innerhalb der Umrißlinie (13) der Kreisfläche, die von zwei Abflachungen (3, 4) angeschnitten ist, angeordnet.

Am gegenüberliegenden Ende (6) besteht der Verlängerungszapfen (10) dagegen aus einem Zylinder (14) und einem Kegelstumpf (15), dessen Grundfläche dem Vollquerschnitt des Bolzens (1), im Falle des Ausführungsbeispiels nach Fig. 1 dem Querschnitt des Gewindezylinders (8) entspricht.

Beide Verlängerungszapfen (10, 20) tragen auf ihrer freien Stirnfläche (16, 16a) eine Kerbe (17, 18), welche ertastbar ist. Beide Kerben sind radial angeordnet.

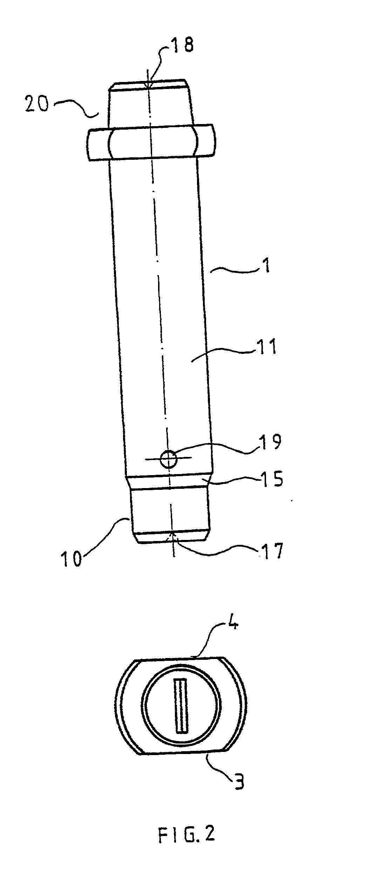

Die Ausführungsform nach Fig. 2 unterscheidet sich von der Ausführungsform nach Fig. 1 dadurch, daß der Bolzenschaft (11) oberhalb des Zapfenkegels (15) eine Aussparung, im Falle des dargestellten Ausführungsbeispiels eine Bohrung (19) aufweist, die den Schaft (11) radial durchsetzt. Als Sicherungselement dient ein nicht dargestellter, weil bekannter Federstecker. Diese Ausführungsform stellt eine Vereinfachung dar, weil das Außengewinde (9) und die mit Innengewinde versehene Mutter (7) fehlen.

Rein äußerlich unterscheidet sich der erfindungsgemäße Bolzen von den üblichen Schraubenbolzen durch den Zapfen (20) oberhalb des kreisscheibenförmigen Kopfes (2) und den Zapfen (10) unterhalb des Gewindezylinders (8), sowie die beiden Kerben (17 und 18). Diese Unterscheidungsmerkmale sind unter günstigen Lichtverhältnissen erkennbar, wobei die Zapfen (10, 20) auch im eingebauten Zustand unter ungünstigen Lichtverhältnissen erkannt werden können. Die Kerben (17, 18) können infolge ihrer Ertastbarkeit auch dann zur Kontrolle verwendet werden, wenn die Zapfen (10, 20) nicht mehr erkannt werden können.

Der Bolzen (1) wird eingebaut, indem man ihn in die Bolzenaussparung des Elementes einschiebt, mit dem zusammen der Bolzen (1) verwendet wird. Dabei wird der Bolzen (1) so gedreht, daß eine seiner beiden Flächen (3, 4) mit dem Vorsprung der Bolzenaussparung zusammentreffen, wodurch der Bolzen gegen Drehungen festgelegt ist. Nach Anbringen des Sicherungselementes (7), d.h. Aufdrehen der Mutter auf das Gewinde (9) bzw. Einschieben des glatten Schenkels des Federsteckers in die Aussparung (19) sitzt der Bolzen in der Bolzenaussparung fest. Tritt Verschleiß auf, so kann die andere der beiden ebenen Anlageflächen (3, 4) zur Wirkung gebracht werden.

**Patentansprüche**

1. Kettenanschlußelement, insbesondere Kettenschäkel für Aufhängungen des Untertagebaus, mit einem zur Kraftübertragung dienenden und vorzugsweise Dauerwechselbeanspruchungen unterliegenden Bolzen (1), welcher ein Kopfende (5) mit einem im wesentlichen kreisscheibenförmigen, am Kreisscheibenumfang abgeflachten Kopf (2) und an seinem dem Kopfende (5) gegenüberliegenden Ende (6) ein Sicherungselement (7) zur Verspannung des Bolzens (1) in einer Bolzenaussparung des Kettenanschlußelementes aufweist, wobei der Bolzen (1) durch das Zusammenwirken der ebenen Kopffläche (3, 4) mit einem Vorsprung des Kettenanschlußelementes im Bereich der Bolzenaussparung drehfest in diesem gelagert ist, dadurch gekennzeichnet, daß der Bolzen (1) zur Verschleißminderung bis zu einer Tiefe von ca. 0,3 mm gehärtet und auf einen Randkohlenstoffgehalt von ca. 0,8 bis 1% aufgekohlt, sowie anschließend angelassen ist, daß der Kopf (2) ein Paar von gegenüberliegenden ebenen Kopfflächen (3, 4) aufweist, und daß der Bolzen (1) zur Unterscheidung von ungehärteten Normalbolzen an beiden Enden (5, 6) mit je einem Rundzapfen (10, 20) mit Vollquerschnitt axial verlängert ist, wobei der Rundzapfen (20) des Kopfendes (5) mit seiner Umrißlinie (12) innerhalb der durch die Kopfflächen (3, 4) verminderten Kreisfläche (13) des Kopfes (2) angeordnet ist, wobei der Rundzapfen (10) am gegenüberliegenden Ende (6) ein Zylinderteil (14) mit kleinerem Durchmesser als dem des Bolzenschaftes (11) aufweist und der Übergang (15) vom Zylinderteil (14) zum Bolzenschaft (11) kegelstumpfförmig ausgebildet ist und wobei beide Rundzapfen (10, 20) auf ihren freien Stirnflächen (16, 16a) je eine ertastbare Kerbe (17, 18) aufweisen.

2. Kettenanschlußelement nach Anspruch 1, dadurch gekennzeichnet, daß der Bolzenschaft (11) an seinem dem Kopfende (5) gegenüberliegenden Ende (6) ausgespart und das Sicherungselement als Federstecker ausgebildet ist.

3. Kettenanschlußelement nach Anspruch 1, dadurch gekennzeichnet, daß die Kegelgrundfläche des Verlängerungszapfens (10) dem Querschnitt des Vollzylinders (8) eines Muttergewindes (9) entspricht, dessen Mutter als Sicherungselement (7) dient.

**Claims**

1. A chain connecting element, particularly a chain link for suspensions in underground workings, having a bolt (1) serving for force transfer and preferably subject to continual stress reversals, which has a head end (5) with a head (2) essentially of circular disc shape, bevelled at the circular disc circumference and a retaining element (7) at its end (6) lying opposite the head end (5) to tension the bolt (1) in a bolt recess of the chain connecting element (7), wherein the bolt (1) is held therein resistant to rotation by cooperation of the flat head surfaces (3, 4) with a projection of the chain connecting element in the region of the bolt recess, characterised in that the bolt (1) is hardened to a depth of about 0.3 mm to reduce wear and is carburised to an edge carbon content of about 0.8 to 1%, as well as subsequently heat-treated, that the head (2) has a pair of opposite flat head surfaces (3, 4), and that the bolt (1) is axially extended with full cross-section for differentiation from unhardened normal bolts at both ends (5, 6) each with a round spigot (10, 20), wherein the round spigot (20) of the head end (5) is arranged with its outline (12) within the circular surface (13) of the head (2) reduced by the head surfaces (3, 4) wherein the round spigot (10) has cylindrical part (14) with smaller diameter than that of the bolt shaft (11) at the opposite end (6) and the transition (15) from the cylindrical part (14) to the bolt shaft (11) is formed as a truncated cone and wherein both of the round spigots (10, 20) have a detectable groove (17, 18) on their free front surfaces (16, 16a).

2. A chain connecting element according to Claim 1, characterised in that the bolt shaft (11) is recessed at its end (6) lying opposite the head end (5) and the retaining element is formed as spring connector.

3. A chain connecting element according to Claim 1, characterised in that the conical base of the extension spigot (10) corresponds to the cross-section of the full cylinder (8) of an internal screw thread (9), of which the nut is used as the retaining element (7).

**Revendications**

1. Elément de raccordement de chaîne, notamment manille, destiné aux suspensions d'une exploitation souterraine, comprenant un boulon (1) servant à la transmission des forces et résistant de préférence à des sollicitations alternées, qui comprend une extrémité de tête (5) avec une tête (2) sensiblement en forme de disque circulaire et avec des à-plats à la périphérie du disque circulaire, et à son extrémité (6) qui est à l'opposé de l'extrémité de tête (5) un élément de retenue (7) pour serrer le boulon (1) dans un évidement à boulon de l'élément de raccordement de chaîne, le boulon (1) étant monté fixe en rotation par la coopération des surfaces planes (3, 4) de la tête avec une saillie de l'élément de raccordement de chaîne dans la région de l'évidement à boulon, caractérisé en ce que le boulon (1), pour réduire l'usure, est durci jusqu'à une profondeur d'environ 0,3 mm et cémenté jusqu'à une teneur en carbone sur la périphérie d'environ 0,8 à 1%, et finale3zment soumis à revenu, en ce que la tête (2) comprend une paire de surfaces planes opposées (3, 4), et en ce que le boulon (1), pour le différencier de boulons normaux non durcis, est prolongé axialement à ses deux extrémités (5, 6) par un tourillon rond respectif (10, 20) de section pleine, le tourillon rond (20) de l'extrémité de tête (5) étant situé par sa ligne périphérique (12) à l'intérieur de la surface circulaire (13) de la tête (2) réduite par les surfaces de tête (3, 4), le tourillon rond (10) de l'extrémité opposée (6) comprenant une partie cylindrique (14) de diamètre plus petit que celui de la tige (11) du boulon, et la transition (15) entre la partie cylindrique (14) et la tige (11) du boulon étant en forme de tronc de cône, et les deux tourillons ronds (10, 20) comprenant sur leurs surfaces frontales libres (16, 16a) une entaille respective (17, 18) pouvant être détectée au toucher.

2. Elément de raccordement de chaîne selon la revendication 1, caractérisé en ce que la tige (11) du boulon est évidée à son extrémité (6) qui est à l'opposé de l'extrémité de tête (5) et en ce que l'élément de retenue est constitué sous forme d'une goupille élastique.

3. Elément de raccordement de chaîne selon la revendication 1, caractérisé en ce que la surface de base conique du tourillon de prolongement (10) correspond à la section de la partie cylindrique pleine (8) d'un filetage pour écrou (9), dont l'écrou sert d'élément de retenue (7).

FIG.1

FIG. 2